# EUROPÄISCHE PATENTSCHRIFT

(11) **EP 0 721 813 B1**
(45) Veröffentlichungstag und Bekanntmachung des Hinweises auf die Patenterteilung: **27.01.1999**
(21) Anmeldenummer: 95250305.0
(22) Anmeldetag: 13.12.1995
(51) Int. Cl.: B21B 45/00, B21B 37/50, C21D 9/60

(54) **Vorrichtung zum Führen von warmgewalztem Band durch einen Induktor**
Device for guiding hot-rolled strip through an inductor
Dispositif pour guider des bandes laminées à chaud à travers un inducteur

(30) Priorität: 16.01.1995 DE 19502071
(43) Veröffentlichungstag der Anmeldung: 17.07.1996
(73) Patentinhaber: MANNESMANN Aktiengesellschaft, 40213 Düsseldorf (DE)
(72) Erfinder: Figge, Dieter, D-45147 Essen (DE)
(74) Vertreter: Meissner, Peter E., Dipl.-Ing.

(56) Entgegenhaltungen:
- EP-A- 0 021 995
- EP-A- 0 578 524
- DE-A- 4 028 542
- GB-A- 620 432
- PATENT ABSTRACTS OF JAPAN vol. 11, no. 180 (M-597), 10.Juni 1987 & JP-A-62 009704 (NIPPON STEEL CORP), 17.Januar 1987,
- PATENT ABSTRACTS OF JAPAN vol. 15, no. 178 (M-1110), 8.Mai 1991 & JP-A-03 042101 (HITACHI LTD), 22.Februar 1991,
- PATENT ABSTRACTS OF JAPAN vol. 6, no. 74 (M-127), 11.Mai 1982 & JP-A-57 014413 (NIPPON STEEL CORP), 25.Januar 1982,
- PATENT ABSTRACTS OF JAPAN vol. 6, no. 178 (M-155), 11.September 1982 & JP-A-57 085601 (SHIN NIPPON SEITETSU K.K.), 28.Mai 1982,
- PATENT ABSTRACTS OF JAPAN vol. 11, no. 78 (M-570), 10.März 1987 & JP-A-61 235020 (NIPPON STEEL CORP), 20.Oktober 1986,
- PATENT ABSTRACTS OF JAPAN vol. 16, no. 22 (E-1156), 20.Januar 1992 & JP-A-03 238783 (NKK CORP), 24.Oktober 1991,

## Beschreibung

Die Erfindung betrifft eine Vorrichtung zur Führung von warmgewalztem Band durch einen zwischen zwei benachbarten Walzgerüsten angeordneten Induktor einer Induktionsheizeinrichtung, insbesondere innerhalb einer Fertigstraße hinter einer Bandgießanlage oder Dünnbrammengießanlage.

Bei der Fertigwalzung von Warmband ist es häufig erforderlich, die Temperatur des Walzgutes vor dem Einlauf in das Walzgerüst auf Walztemperatur einzustellen. Erfolgt die Nachwärmung des Walzgutes durch Induktionserwärmung in der Vorstraße, so wird sie bei großen Walzgutquerschnitten und langsamen Walzgeschwindigkeiten durchgeführt. Üblich ist es auch, das Walzgut dort durch gaserwärmte Öfen auf Walztemperatur zu bringen. Die Nachwärmung in der Fertigstraße erfolgt bei höheren Geschwindigkeiten und erfordert besondere Maßnahmen, weil kleine Querschnitte erwärmt werden müssen.

In letzter Zeit haben Bandgießverfahren und Dünnbrammengießanlagen an Bedeutung gewonnen. Dabei wird ein stranggegossenes Vorband unmittelbar einer Weiterverformung zugeführt, eine Endloswalzung mit dem Vorteil der Walzung in einer Hitze wird angestrebt; doch entstehen Probleme bei der Führung des Walzgutes, sowohl beim Start, als auch bei der Walzung, wie auch bei den Abstimmungen der Walzgeschwindigkeiten innerhalb der Walzstraße.

Durch die europäische Patentanmeldung 01 62 361 ist eine Einrichtung zur Bandzugregelung in einer Warmbandstraße bekannt geworden, die dazu dient, die sich ändernden Bandzüge zu ermitteln und die Walzgerüste der Warmbandwalzstraße in ihren Geschwindigkeiten entsprechend zu regeln, um die Schwankungen der Zugkräfte klein zu halten.

Zur Verbesserung der Temperaturführung im Band wird im deutschen Patent 38 40 812 vorgeschlagen, zwischen zwei benachbarten Walzgerüsten einer Fertigstraße im Anschluß an eine Dünnbrammengießanlage Vorrichtungen zum induktiven Aufheizen vorzusehen, die einer Abkühlung des Bandes während des Walzvorganges entgegenwirken. Dies ist insbesondere bei der Verwalzung der sogenannten Dünnbrammen von Bedeutung, weil wegen der kleinen Gießquerschnitte die im Material gespeicherte Wärmeenergie oft nicht ausreicht, um die erforderlichen Endwalztemperaturen einzuhalten. Wenn man Banddicken von unter 2 mm erreichen will, ist eine Walzguterwärmung im Fertigstraßenbereich unumgänglich. Noch notwendiger wird eine Erwärmung bei der Verwalzung von Querschnitten aus Bandgießanlagen, wenn dabei mehrere Gerüste notwendig sind.

Induktionsheizeinrichtungen sind gut geeignet, die erforderliche Heizenergie zur Verfügung zu stellen, weil sie in der Lage sind, in sehr kurzer Zeit gleichmäßige Temperaturveränderungen herbeizuführen. Eine gleichmäßige Temperatur ist dieVoraussetzung für eine gute Bandqualität, die durch den Induktor im Band gesichert werden soll.

Für die gleichmäßige Erwärmung im Induktor ist aber auch ein konstanter Abstand zwischen Induktionsspule und Walzgut Voraussetzung. Dies ist aber nur bei möglichst ruhiger Lage des Bandes im Induktor zu erreichen, bei der die Ober- und Unterseite des Bandes gleich weit von den Spulen entfernt sein sollen. Im Extremfall können sonst Unruhe und Flattern des Bandes im Induktorraum zu ungleichmäßigen Temperaturen bzw. zu Lichtbögen zwischen Spule und Band führen, durch die die Oberfläche des Bandes beschädigt wird.

Die Erfindung geht aus von einer Vorrichtung zur Führung von warmgewalztem Band mit den im Oberbegriff des Patentanspruchs 1 genannten Merkmalen. Diese sind aus der JP-A-62-9704 bekannt.

Aufgabe der vorliegenden Erfindung ist es, ausgehend von den beschriebenen Problemen und Nachteilen des Standes der Technik, eine Vorrichtung zur zuggeregelten Führung von warmgewalztem Band durch einen zwischen zwei benachbarten Walzgerüsten angeordneten Induktor zu schaffen, die eine ruhige Bandlage im Induktor und damit auch eine gleichmäßige Erwärmung des Bandes ermöglicht.

Zur Lösung der Aufgabe wird vorgeschlagen, daß das Band zwischen den Walzgerüsten unter geregeltem Zug über mindestens zwei Führungsrollen in einer Bandlaufebene geführt ist, die mittig durch den Induktorraum zwischen den Induktionsspulen verläuft und daß zur Zugregelung des Bandes eine dem Induktor und der ersten Führungsrolle vorgeordnete, auf Kraft reagierende Zugmeßrolle vorgesehen ist.

Mit der vorgeschlagenen Vorrichtung werden die Probleme der Geschwindigkeitsregelung von Walzgerüsten, der Bandführung und der induktiven Erwärmung zwischen zwei Walzgerüsten gemeinsam gelöst, indem das Band einer durch den geregelten Bandzug ermöglichten gesicherten Führung unterworfen wird. Während durch die Zugregelung das Band straff gespannt den Induktorraum durchläuft, sorgen die Führungsrollen für eine exakte waagerechte Auflage des Bandes innerhalb des Induktorraumes.

In einer Ausgestaltung der Erfindung ist vorgesehen, daß der Induktor - C-förmig ausgebildet- die Ober- und Unterseite des Bandes umgreift und quer zur Bandlaufrichtung zweigeteilt ist, wobei zwischen den beiden Teilen eine weitere Führungsrolle in der Bandlaufebene angeordnet ist.

Die weitere Führungsrolle innerhalb des Induktors stabilisiert die Lage des Bandes im Induktorraum, die C-förmige Ausbildung des Induktors gestattet diesen auch bei eingefädeltem Band aus dessen Bereich zu entfernen.

In einer weiteren Ausgestaltung der Erfindung ist vorgesehen, daß der Induktor auf einem quer zur Bandlaufrichtung verfahrbaren Wagen angeordnet und aus dem Bandbereich herausfahrbar ist, wobei gleichzeitig mit dem Herausfahren des Induktors ein Rollentisch unter das Band bewegbar ist. Diese Ausgestaltung ist insbesondere für den Startvorgang von Bedeutung, bei dem der Bandanfang noch nicht exakt und ruhig durch den Induktor geführt werden kann. Erst nach Einfädeln des Bandanfanges im zweiten Walzgerüst kann der notwendige Zug zur straffen Führung des Bandes aufgebracht werden. In der Zwischenzeit dient der einfahrbare Rollentisch zur Auflageführung des Bandes, er wird gegen den Induktor ausgetauscht, sobald stabile Verhältnisse herrschen, bei denen der Induktor ordnungsgemäß arbeiten kann.

Vorzugsweise sind Induktor und Rollentisch auf einem gemeinsamen Wagen angeordnet, so daß durch Querverfahren dieses Wagens wechselweise Rollentisch und Induktor in den Bereich des Bandes gebracht werden können.

Zur noch besseren Führung des Bandes innerhalb des Induktors wird nach einer weiteren Ausgestaltung der Erfindung vorgesehen, mindestens den beidseitig des Induktors angeordneten Führungsrollen eine von oben auf das Band absenkbare Andruckrolle zuzuordnen. die den Bandlauf beruhigt und Schwingungen vermeidetdurch, die das Band von den Führungsrollen abheben könnten. Die Andruckrollen sind pneumatisch kraftgeregelt anpreßbar.

Beim Wechseln der zu walzenden Bandstärken müssen die Spalte im Induktor, das heißt der Abstand zwischen Spule und Walzgut, neu eingestellt werden, denn der Spalt an der Unterseite und der Spalt an der Oberseite des Bandes müssen gleich groß sein, damit die induzierten Wärmemengen und damit die Temperaturen an Unter- und Oberseite des Bandes gleich sind. Um den Induktor nicht jedes Mal vertikal einstellen zu müssen, wird nach einem weiteren Merkmal der Erfindung vorgeschlagen, die Führungsrollen gegenüber dem Induktor vertikal verstellbar auszubilden. Das ist wesentlich einfacher, als den Induktor zusätzlich vertikal verstellbar zu gestalten. Da die Andruckrollen ohnehin pneumatisch kraftgeregelt anpreßbar sind, genügt es, die unteren Führungsrollen verstellbar auszuführen.

Im Bereich der Walztemperaturen von 1000 bis 1250 Grad C findet eine verstärkte Zunderbildung an der Oberfläche des Bandes statt, insbesondere dann, wenn der Induktor das Band kurzzeitig auf ca. 1100 Grad C aufheizen muß. Aus diesem Grund sollten Maßnahmen gegen die Zunderbildung getroffen werden. Erfindungsgemäß wird vorgeschlagen, den Induktorraum mit Schutzgas zu fluten, um den Sauerstoff zu verdrängen, der für die Zunderbildung verantwortlich ist.

Die vorliegende Erfindung vereinigt bekannte Mittel und Maßnahmen zu einer Vorrichtung, durch die die Aufgabe der Erfindung lösbar wird. Die Bandlage innerhalb des Induktorraumes bleibt trotz und wegen der Zugregelung absolut konstant, so daß die Bandtemperaturen infolge der gleichbleibenden Abstände von der Induktorspule konstant gehalten werden können. Mit der erfindungsgemäßen Vorrichtung wird eine Endloswalzung mit gleichmäßig guter Qualität möglich, große Öfen können eingespart werden. Die erfindungsgemäße Vorrichtung ist nicht auf Dünnbrammenanlagen beschränkt, sie ist auch in anderen Warmwalzanlagen anwendbar.

Ein Ausführungsbeispiel der Erfindung wird anhand der Zeichnung nachfolgend beschrieben. Es zeigt:
- Fig. 1: zwei Walzgerüste mit erfindungsgemäß dazwischen angeordnetem Induktor in der Startphase,
- Fig. 2: die Walzgerüste nach Figur 1 während des Walzvorganges,
- Fig. 3: einen Querschnitt durch den den Induktor tragenden Wagen,
- Fig. 4: eine Draufsicht auf den Wagen nach Figur 3,
- Fig. 5: die Zugmeßrolle in der Startphase,
- Fig. 6: die Zugmeßrolle während des Walzvorganges,
- Figl 7: eine der Führungsrollen mit Andruckrolle,
- Fig. 8: einen Querschnitt durch den zweigeteilten Induktor mit Inertgaseindüsung und
- Fig. 9: einen Schnitt durch den Induktor in Bandquerrichtung mit Verschlußklappen.

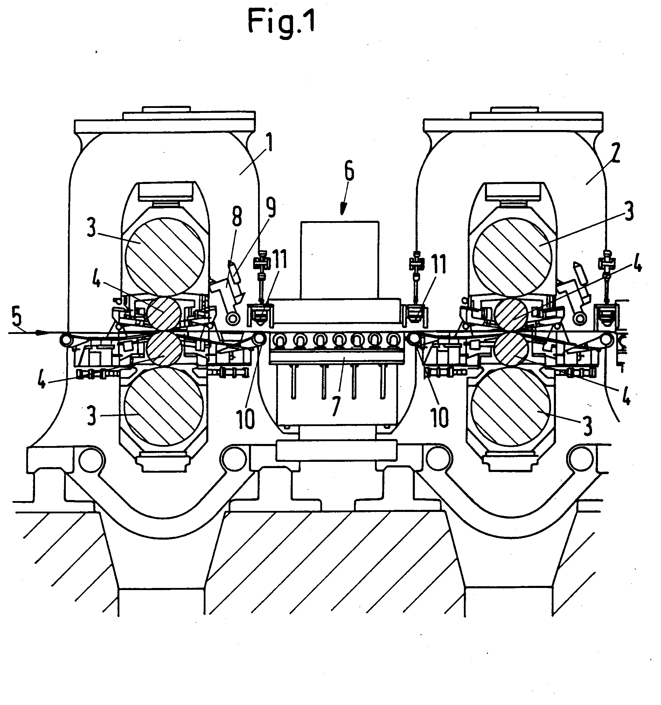

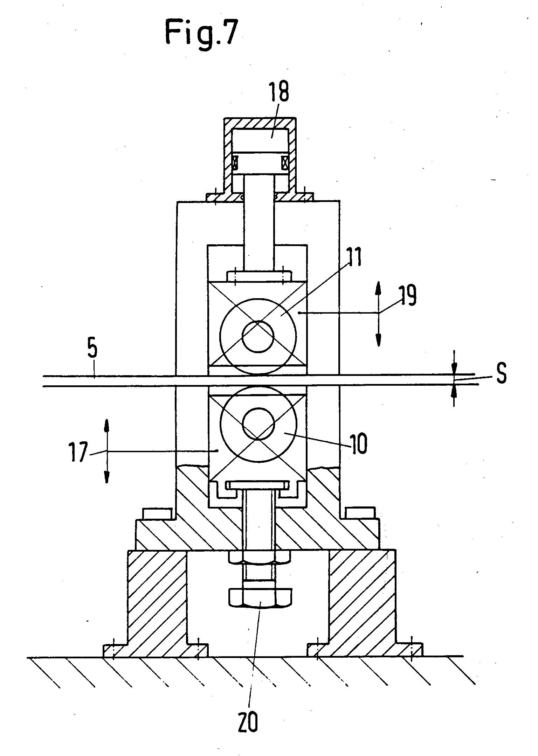

In Figur 1 sind mit 1 und 2 zwei von mehreren Walzgerüsten einer Fertigstraße bezeichnet, die im Anschluß an eine Dünnbrammengießanlage angeordnet sind. Die Walzgerüste 1 und 2 sind Quartogerüste mit Stützwalzen 3 und Arbeitswalzen 4, die das mit 5 bezeichnete Band reduzieren. Zwischen den Walzgerüsten 1 und 2 ist in erfindungsgemäßer Weise eine Induktonsheizeinrichtung 6 angeordnet, die später noch genauer beschrieben wird. Während der in Figur 1 dargestellten Startphase, d. h. während des Einfädelns des Bandes 5 in die Arbeitswalzen 4 des Walzgerüstes 2 ist die Induktonsheizeinrichtung 6 seitlich neben das Band 5 gefahren, während das Band 5 über den Rollentisch 7 geführt und dabei abgestützt wird. Auslaufseitig des Walzgerüstes 1 ist, bei 8 dargestellt, eine Zugmeßrolle angeordnet, die mit Hilfe der Kolben-Zylinder-Einheit 9 gegen die Oberfläche des Bandes 5 schwenkbar und in dieses eintauchbar ist. Beidseitig des Rollentisches 7 sind -bei 10 dargestellt-zwei Führungsrollen unterhalb des Bandes angeordnet, denen jeweils an der Oberseite des Bandes 5 Andruckrollen zugeordnet sind, die später anhand der Figur 7 noch beschrieben werden.

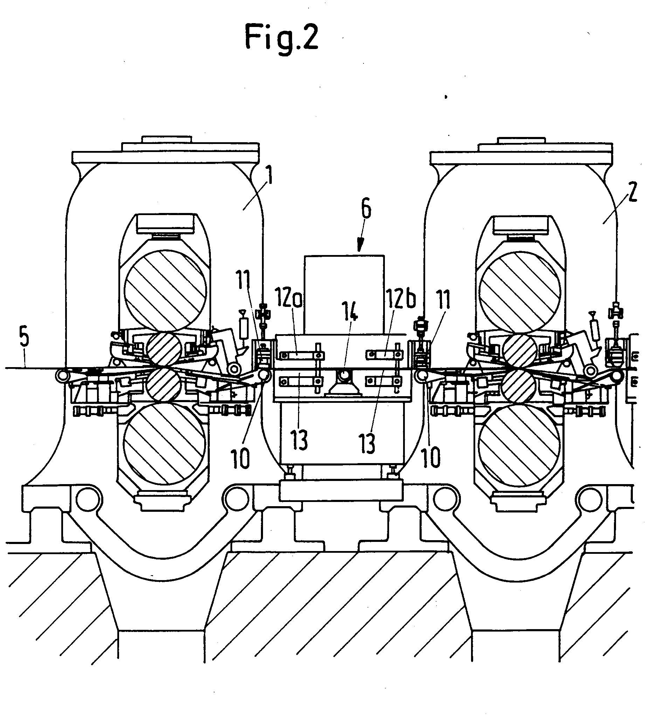

In Figur 2 sind gleiche Teile gleich bezeichnet. Figur 2 stellt die Walzphase des Bandes 5 dar. Die Induktionsheizeinrichtung 6 ist in die Walzlinie eingefahren, so daß der zweigeteilte Induktor 12a, 12b ober- und unterhalb des Bandes 5 so positioniert ist, daß das Band 5 über die Spulen des Induktors 12a, 12b erhitzt werden kann. Das Band 5 ist durch die Führungsrollen 10 so positioniert, daß es in einer Ebene mittig des innerhalb des Induktors 12a, 12b gebildeten Induktorraumes 13 verläuft. Eine zusätzliche Führungsrolle 14 zwischen den beiden Hälften des Induktiors 12a und 12b stützt das Band 5 zusätzlich ab und dient der exakten Führung des Bandes 5 innerhalb der Induktionseinrichtung 6. Die Andruckrollen 11 der Führungsrollen 10 verhindern ein Flattern des Bandes und sorgen für einen ruhigen Bandlauf. Die Zugmeßrolle 8 ist in das Band 5 eingetaucht, so daß die Meßeinrichtungen die Zugspannung des Bandes 5 erfassen und die Antriebe der Walzgerüste 1 und 2 so regeln können, daß ein gleichmäßiger Bandzug eingehalten wird, mit dem das Band 5 exakt durch den Induktor 12a, 12b geführt wird.

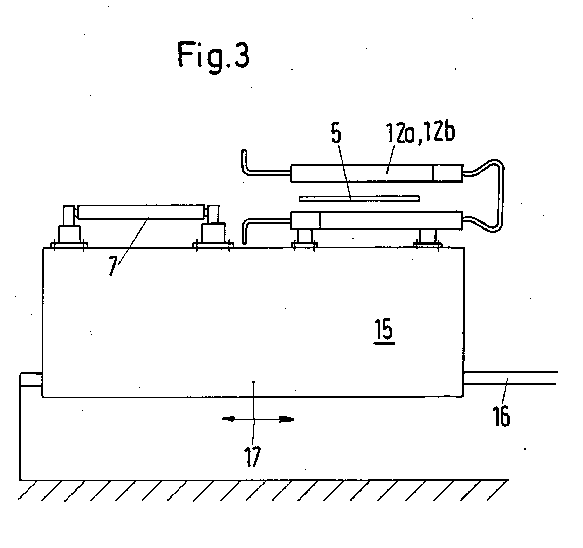

Wie Figur 3 erkennen läßt, ist der Induktor 12a, 12b im Querschnitt C-förmig ausgebildet, so daß die nicht näher bezeichneten Induktionsspulen die Oberseite und Unterseite des Bandes 5 übergreifen können, und trotzdem der Induktor 12a, 12b aus dem Bereich des Bandes entfernt werden kann, ohne das Band 5 ausfädeln zu müssen. Zu diesem Zweck ist der Induktor 12a, 12b auf dem mit 15 bezeichneten und grob schematisch dargestellten Wagen angeordnet, der auf Schienen 16 in Pfeilrichtung 17 verfahrbar ist. Auf dem gleichen Wagen 15 ist der Rollentisch 7 befestigt, so daß beim Verfahren des Wagens 15 (in der Zeichnungsebene) nach rechts der Induktor 12a, 12b aus dem Bereich des Bandes 5 herausfahren und gleichzeitig der Rollentisch 7 unter das Band 5 fahren kann. In dieser Stellung des Wagens 15 kann das Band 5 in das Walzgerüst 2 eingefädelt werden. Nach Beginn des eigentlichen Walzvorganges kann der Wagen 15 (in der Zeichnungsebene) nach links verschoben werden, so daß der Rollentisch in die in Figur 3 dargestellte Position gelangt und der Induktor 12a, 12b das Band umgreifen kann.

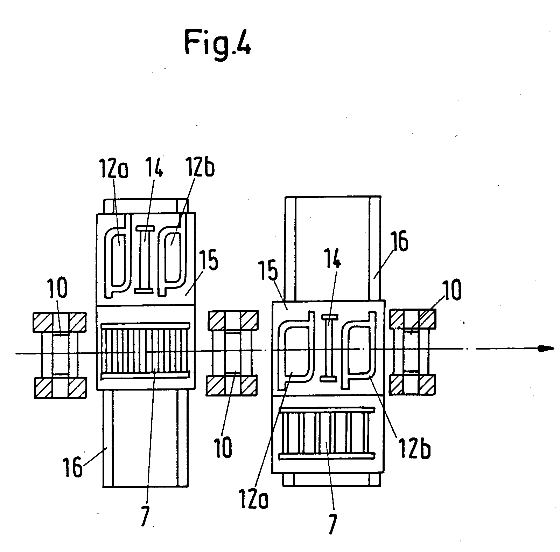

In Figur 4 sind die beiden Verschiebestellungen des Wagens 15 nebeneinander dargestellt. Gleiche Teile sind auch hier gleich bezeichnet.

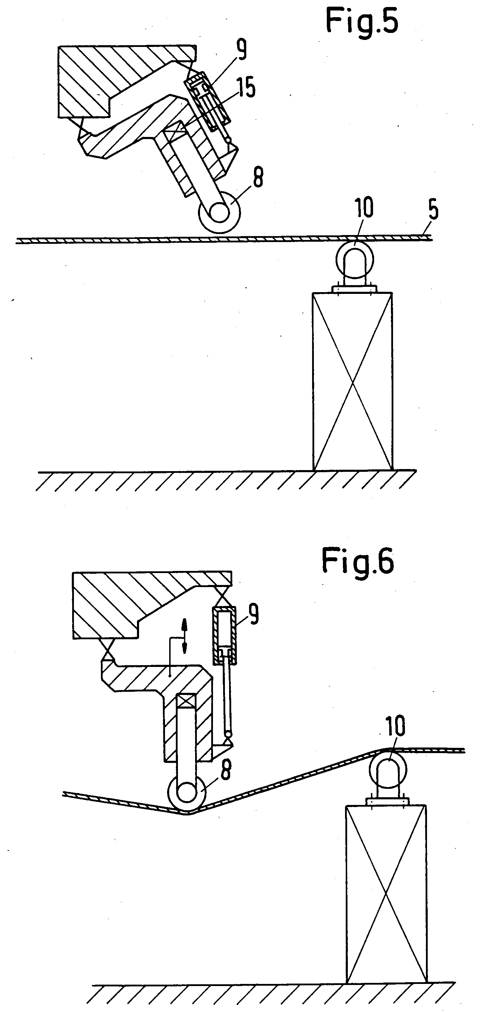

Figuren 5 und 6 zeigen in vereinfachter vergrößerter Darstellung die Zugmeßrolle 8, wobei Figur 5 die Startposition beim Einfädeln des Bandes und Figur 6 die Position in der Walzphase darstellt. Bei der Zugmeßrolle handelt es sich beispielsweise um eine sogenannte Tensiometer-Rolle, die über eine Kraftmeßeinheit 15 die Andrückkratt der Rolle 8 am Band 5 und auf diese Weise die Bandzugkräfte im Band 5 erfaßt. Das Meßsignal wird zur Auswertung einem Rechner zugeführt, der aus den gemessenen Werten ein Signal zur Steuerung der Walzwerksanstellung bzw. des Walzwerksantriebes gibt, um den gleichmäßigen Zug in bekannter Weise einzuregeln. Die Meßrolle 8 ist über die Kolben-Zylinder-Einheit 9 verschwenkbar, wie in den Figuren 5 und 6 dargestellt. Bei 10 ist die vor dem Induktor angeordnete Führungsrolle erkennbar, die die Bandlaufebene des Bandes 5 innerhalb des Induktors festlegt. Erkennbar wird diese Ebene durch die Zugmeßeinrichtung nicht beeinflußt oder verändert.

In Figur 7 ist eine beispielhafte Anordnung der Führungsrolle 10 dargestellt, die, wie der Pfeil 17 erkennbar macht, in ihrer Höhenlage verstellbar ist. Damit läßt sich die Führungsrolle 10 auf unterschiedliche Bandstärken s einstellen, so daß die Bandlaufebene stets auf die Mitte des Induktors 12a, 12b ausgerichtet werden kann. Oberhalb der Führungsrolle 10 ist die Andruckrolle 11 dargestellt, die über den Pneumatikzylinder 18 mit vorherbestimmbarer Anpreßkraft gegen die Oberseite des Bandes 5 anpreßbar und in ihrer Höhenlage, wie bei 19 angedeutet, verstellbar ist. Zum Einstellen der Führungsrolle 10 dient die Stellschraube 20.

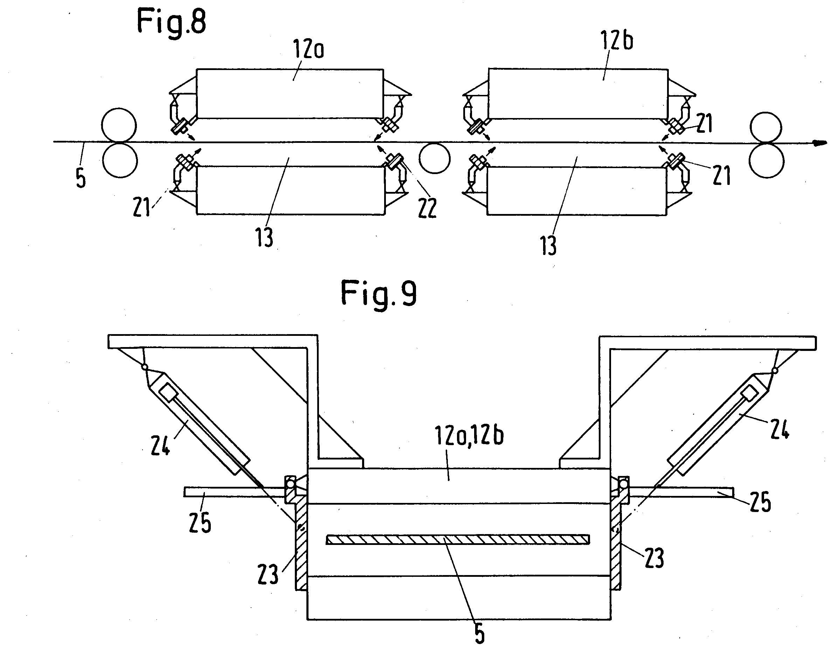

Die Figuren 8 und 9 zeigen grob vereinfacht Beispiele, wie der Induktorraum 13 zwischen den Induktoren 12a, 12b mit Inertgas geflutet werden kann. Zu diesem Zweck sind jeweils ca. zwanzig Düsen 21 über die Breite des Bandes 5 in Richtung des Induktorraumes geneigt angeordnet und sprühen Inertgas in den Induktionsraum 13. Die Düsen 21 sind durch Klappen 22 abgeschirmt, die den Austrittsquerschnitt zwischen Induktor 12a, 12b und Band 5 verringern. Wie in Figur 9 dargestellt, können auch die seitlichen Öffnungen des Induktors 12a, 12b durch Klappen 23 verschlossen werden, die über Kolben-Zylinder-Einheiten 24 in die Position 25 verschwenken, wenn der Induktor aus dem Bereich des Bandes 5 herausgefahren werden soll.

Die Funktionsweise der erfindungsgemäßen Vorrichtung ist wie folgt zu beschreiben:

Nach dem Einfädeln des Bandes 5, d. h. dem Durchführen des Bandes durch die Arbeitswalzen 4 des Walzgerüstes 1, dem Transport über den Rollentisch 7 und dem Einfädeln durch die Arbeitswalzen 4 des Walzgerüstes 2 wird die Kolben-Zylinder-Einhzeit 9 der Zugmeßeinrichtung betätigt, so daß die Meßrolle 8 in das Band 5 eintaucht (Figur 2), sodaß über den Meßwert der Zug des Bandes 5 zwischen den Walzgerüsten 1 und 2 geregelt werden kann. Gleichzeitig wird der Induktor 12a, 12b durch Verfahren des Wagens 15 über das Band 5 gefahren, wobei gleichzeitig der Rollentisch 7 aus dem Bereich des Bandes transportiert wird. Das Band 5 kommt auf den Führungsrollen 10 und 14 zur Auflage und wird mit Hilfe der Andruckrollen 11 an den Führungsrollen 10 geführt gehalten. Das in der Mitte des Induktionsraumes 13 geführte Band 5 kann nun mittels des Induktors 12a, 12b erhitzt werden, wobei eine gleichmäßige Erwärmung des definiert geführten Bandes zu erwarten ist.

Der Induktorraum 13 wird (Figuren 8 und 9) mit Inertgas, beispielsweise Stickstoff oder Argon geflutet, um den Sauerstoff zu verdrängen, der sonst zu einer starken Verzunderung der Bandoberfläche führen würde.

## Patentansprüche

1. Vorrichtung zur Führung von warmgewalztem Band (5) durch einen zwischen zwei benachbarten Walzgerüsten (1,2) angeordneten Induktor (12a,12b) einer Induktionsheizeinrichtung (6), insbesondere innerhalb einer Fertigstraße hinter einer Bandgießanlage oder Dünnbrammengießanlage, wobei das unter geregeltem Zug stehende Band (5) über mindestens zwei beidseitig des Induktors (12a,12b) zwischen den Walzgerüsten (2,3) angeordnete Führungsrollen (10) mittig durch den Induktorraum (13) zwischen den Induktionsspulen geführt ist,
dadurch gekennzeichnet,
daß dem Induktor (12a,12b) und der ersten Führungsrolle (10) eine auf Kraft reagierende Zugmeßrolle (8) vorgeordnete ist, wobei der Induktor (12a,12b) C-förmig ausgebildet die Ober- und und Unterseite des Bandes (5) umgreift und quer zur Bandlaufrichtung zweigeteilt (12a und 12b) ist und zwischen den beiden Teilen eine weitere Führungsrolle (14) in der Bandlaufebene angeordnet ist.

2. Vorrichtung nach Anspruch 1,
dadurch gekennzeichnet
daß der Induktor (1 2a, 12b) auf einem quer zur Bandlaufrichtung verfahrbaren Wagen (15) angeordnet und aus dem Bandbereich herausfahrbar ist, wobei gleichzeitig mit dem Herausfahren des Induktors (12a,12b) ein Rollentisch (7) unter das Band (5) bewegbar ist.

3. Vorrichtung nach Anspruch 2,
dadurch gekennzeichnet,
daß Induktor (12a,12b) und Rollentisch (7) auf einem gemeinsamen Wagen (15) angeordnet sind.

4. Vorrichtung nach einem der Ansprüche 1 bis 3,
dadurch gekennzeichnet,
daß mindestens den beidseitig des Induktors (12a,12b) angeordneten Führungsrollen (10) eine von oben auf das Band (5) absenkbare Andruckrolle (11) zugeordnet ist.

5. Vorrichtung nach Anspruch 4,
dadurch gekennzeichnet,
daß die Andruckrollen (11) pneumatisch kraftgeregelt anpreßbar sind.

6. Vorrichtung nach Anspruch 4 und 5,
dadurch gekennzeichnet,
daß die Führungsrollen (10,14) gegenüber dem Induktor (12a,12b) vertikal verstellbar sind.

7. Vorrichtung nach Anspruch 1,
dadurch gekennzeichnet,
daß der Induktorraum (13) mit Schutzgas durchflutbar ist.

## Claims

1. A device for guiding hot-rolled strip (5) through an inductor (12a, 12b), located between two adjacent roll stands (1, 2), of an induction heating means (6), in particular within a production line after a strip-casting installation or thin slab-casting installation, the strip (5), which is under controlled tension, being guided centrally through the inductor space (13) between the induction coils over at least two guide rolls (10) located on either side of the inductor (12a, 12b) between the roll stands (2, 3),
characterised in that the inductor (12a, 12b) and the first guide roll (10) are preceded by a tension measuring roll (8) which reacts to force, the inductor (12a, 12b) surrounding the upper and lower sides of the strip (5) in a C-shape and being divided in two (12a and 12b) transversely to the direction of travel of the strip and an additional guide roll (14) being arranged between the two parts in the plane of travel of the strip.

2. A device according to Claim 1, characterised in that the inductor (12a, 12b) is arranged on a carriage (15) which can be moved transversely to the direction of travel of the strip and can be moved out from the region of the strip, with a roller table (7) being able to be moved beneath the strip (5) simultaneously with the moving-out of the inductor (12a, 12b).

3. A device according to Claim 2, characterised in that the inductor (12a, 12b) and roller table (7) are arranged on a common carriage (15).

4. A device according to one of Claims 1 to 3, characterised in that at least the guide rolls (10) arranged on either side of the inductor (12a, 12b) are allocated a contact pressure roller (11) which can be lowered from above onto the strip (5).

5. A device according to Claim 4, characterised in that the contact pressure rollers (11) can be pressed on under pneumatic force control.

6. A device according to Claims 4 and 5, characterised in that the guide rolls (10, 14) are vertically adjustable relative to the inductor (12a, 12b).

7. A device according to Claim 1, characterised in that the inductor space (13) can be flooded with protective gas.

## Revendications

1. Dispositif pour guider un feuillard (5) laminé à chaud à travers un inducteur (12a, 12b), agencé entre deux cages de laminoir voisines (1, 2), d'un dispositif de chauffage par induction (6), en particulier à l'intérieur d'un train finisseur derrière une installation de coulée de feuillards ou une installation de coulée de brames minces, le feuillard (5) se trouvant sous une tension réglée étant guidé, de façon centrale, à travers l'espace d'inducteur (13) entre les bobines d'induction par l'intermédiaire d'au moins deux galets de guidage (10) agencés des deux côtés de l'inducteur (12a, 12b) entre les cages de laminoir (2, 3),
caractérisé en ce qu'un galet de mesure de tension (8) réagissant à une force est prévu en amont de l'inducteur (12a, 12b) et du premier galet de guidage (10), l'inducteur (12a, 12b), réalisé en forme de C, enveloppant le dessus et le dessous du feuillard (5) et étant divisé en deux (12a et 12b) transversalement à la direction d'avance du feuillard et, entre les deux parties, un autre galet de guidage (14) est agencé dans le plan d'avance du feuillard.

2. Dispositif selon la revendication 1,
caractérisé en ce que l'inducteur (12a, 12b) est agencé sur un chariot (15) déplacable transversalement à la direction d'avance du feuillard et peut être retiré de la zone du feuillard, une table à rouleaux (7) étant déplacable sous le feuillard (5) simultanément au retrait de l'inducteur (12a, 12b).

3. Dispositif selon la revendication 2,
caractérisé en ce que l'inducteur (12a, 12b) et la table à rouleaux (7) sont agencés sur un chariot commun (15).

4. Dispositif selon une des revendications 1 à 3,
caractérisé en ce qu'au moins aux galets de guidage (10) agencés des deux côtés de l'inducteur (12a, 12b), il est associé un galet de pressage (11) pouvant être abaissé du haut sur le feuillard (5).

5. Dispositif selon la revendication 4,
caractérisé en ce que les galets de pressage (11) peuvent être pressés pneumatiquement par une force réglable.

6. Dispositif selon les revendications 4 et 5,
caractérisé en ce que les galets de guidage (10, 14) sont verticalement réglables par rapport à l'inducteur (12a, 12b).

7. Dispositif selon la revendication 1,
caractérisé en ce que l'espace d'inducteur (13) peut être traversé par un gaz protecteur.
